# EUROPEAN PATENT APPLICATION

(11) **EP 1 060 979 A2**
(43) Date of publication of application: **20.12.2000**
(21) Application number: 00112371.0
(22) Date of filing: 09.06.2000
(51) Int. Cl.: B62K 25/30

(54) **A bicycle frame with rear wheel suspension**

(30) Priority: 16.06.1999 IT TO990512
(71) Applicant: Rolle, Adriano, 10080 Rivara Canavese (Torino) (IT)
(72) Inventor: Rolle, Adriano, 10080 Rivara Canavese (Torino) (IT)
(74) Representative: Fioravanti, Corrado

(57) **Abstract**

A bicycle frame which includes a main frame (10) and a rear wheel suspension; the suspension including a rear framework (11) on which to mount the rear wheel, pivoted horizontally (12) on the main frame (10) near the region of the pedals, and a shock absorber (23, 31) interposed between the main frame and the rear framework. The shock absorber is housed inside the top tube (18) of the main frame (10) which extends from the seat area to the handlebars area. The suspension also includes a thrust rod (27) with a rear end pivoted horizontally (33) onto the rear framework (11) and a front end (30) guided inside the top tube (18) and bearing against a surface (29a) which is movable inside the top tube (18) for transmitting longitudinal compression stress to the shock absorber.

## Description

The present invention relates to a bicycle frame of the type defined in the preamble to Claim 1.

Bicycles with a frame of this type have a resilient element, generally a shock absorber, usually arranged in an external position beneath the seat. In order to position the shock absorber in this way, the shape of the tube extending vertically beneath the seat is sometimes modified, whereby the seat is mounted on a tube projecting from the rest of the frame and thus inevitably liable to break or to become unduly deformed; in other cases, the shock absorber is arranged externally beneath the top tube which extends from the seat area to the handle bar area.

The U.S. patent 5,772,228 provides a bicycle frame of the aforesaid type in which the shock absorber is integrated into the top tube.

One object of the present invention is to provide a bicycle frame which is both light and very strong structurally, in particular to avoid the risk of the suspension members breaking.

Another object of the invention is to provide a frame constituted by fewer parts than those known at present and which is easy to assemble.

These objects are achieved, according to the present invention, by providing a bicycle frame having the characteristics claimed in Claim 1.

A further object of the present invention is to provide a bicycle frame in which the rear wheel suspension can be locked into a passive position which makes the frame rigid in order to prevent part of the energy generated by pedalling from being wasted to operate the shock absorber when its action is not required, for example when pedalling on the flat or uphill.

This object is achieved, again according to the present invention, by providing a frame having the characteristics claimed in Claim 12.

Yet another object is to provide a frame which is able to assume an intermediate position in which movement of the resilient element is restrained so as to give the bicycle a semi-rigid arrangement.

This additional object is achieved, still according to the present invention, by a frame having the characteristics claimed in Claim 13.

Further important characteristics of the invention are described in the dependent Claims.

Further characteristics and advantages of the invention will become more apparent from the detailed description of one embodiment thereof, provided purely by way of non-limitative example with reference to the appended drawings, in which:
Figure 1 is a side view of a bicycle frame according to the present invention;
Figure 2 is a partially sectioned view of a detail of the frame of Figure 1;
Figure 3 is a partial rear view along the arrow III of Figure 2;
Figure 4 is a partially exploded side view of a preferred embodiment of the shock absorber device fitted to the frame of the invention;
Figure 5 is a partially exploded side view of a thrust rod which cooperates with the shaft of the shock absorber of Figure 4; and
Figures 6A and 6B are side and rear views respectively of an accessory element to be applied to the frame of the invention.

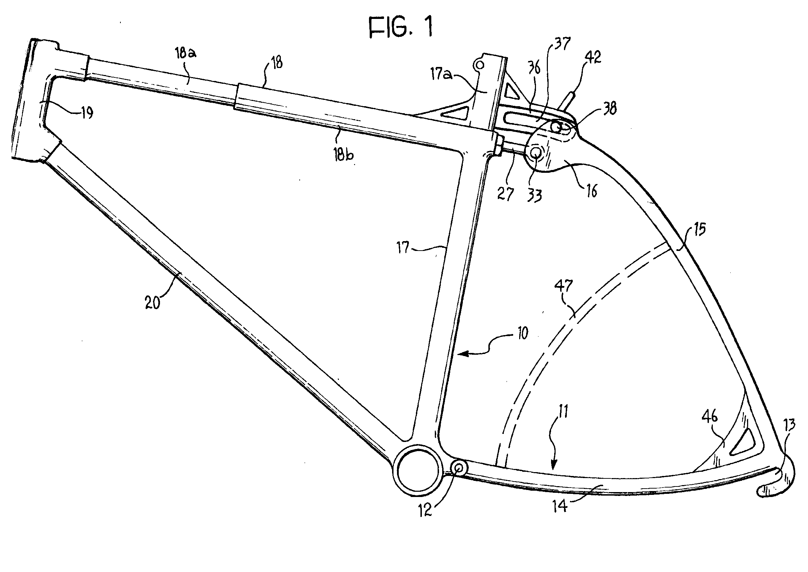

With reference first to Figure 1, a bicycle frame according to the present invention includes a main frame 10 and a rear framework 11, pivoted lowerly at 12 on the main frame near the region of the pedals and forming a seat 13 in which the hub of the rear wheel (not illustrated) is mounted for rotation.

The rear frame 11 includes a pair of V-shaped arms securely fixed to each other and arranged one each side of the rear wheel; in the side view of Figure 1 only one V-shaped arm, indicated 14, 15 is shown, a lower portion 14 extending from the pivot point 12 to the seat 13 and a branch 15 extending obliquely from the seat 13 to form an upper head 16, described in detail later.

The main frame 10 includes a substantially vertical seat tube 17 which extends from the region of the pedals to that of the seat, a substantially horizontal top tube 18 which extends from the region of the seat to the region of the handle bar and forms a 90° angle with the seat tube 17, a front vertical tube 19 and an inclined down tube 20.

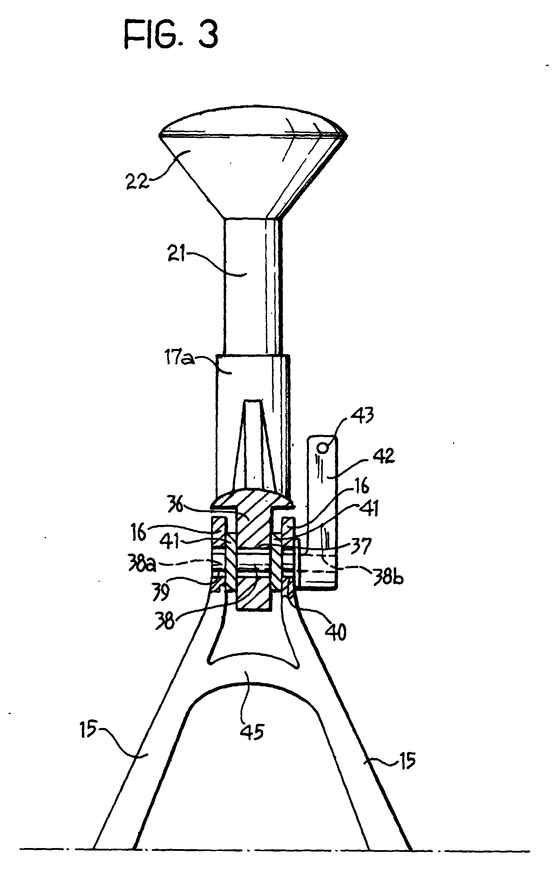

The top tube 18 has a front portion 18a with a smaller cross section and a rear portion 18b with a larger cross section; the two tube portions 18a and 18b are preferably joined by being screwed together and then secured by welding or with adhesive. The vertical seat tube 17 extends beyond the intersection with the top tube 18 so as to form an upper seat tube portion 17a of an appropriate length to accommodate the pillar 21 of a seat 22, shown in Figure 3, therein and to firmly secure it. The top tube 18 is inclined to the horizontal by about 10-15°.

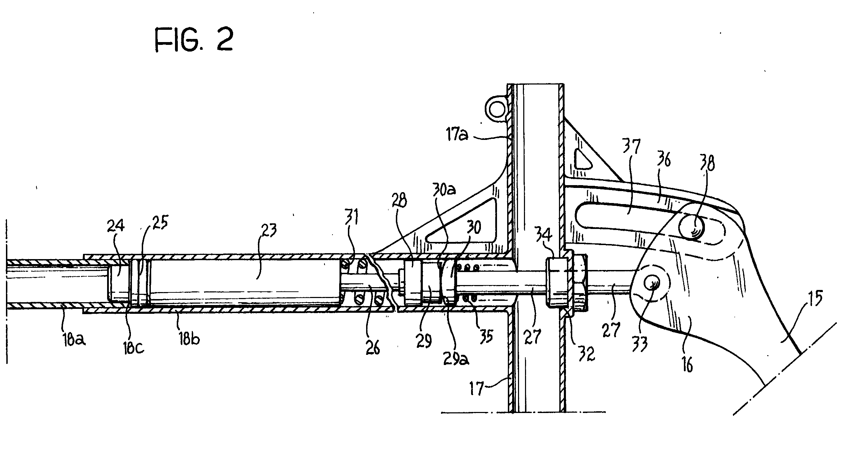

With reference to Figure 2, a shock absorber device for the rear wheel is arranged entirely within the top tube 18, in particular within the enlarged-section rear portion 18b.

At the point where section of the top tube 18 becomes narrower, that is to the rear end of the front portion 18a, an end stop 24 is arranged, preferably screwed in, thereby constituting a fixed transverse surface together with the transverse surface 18c of the portion 18a. With the interposition of an elastomeric element 25, this surface acts as resistance for the shock absorber device.

In the embodiment shown in the drawings, the shock absorber device includes a hydraulic cylinder 23 of a known type, with the head (not shown) of a shaft 26 slidably engaged therein.

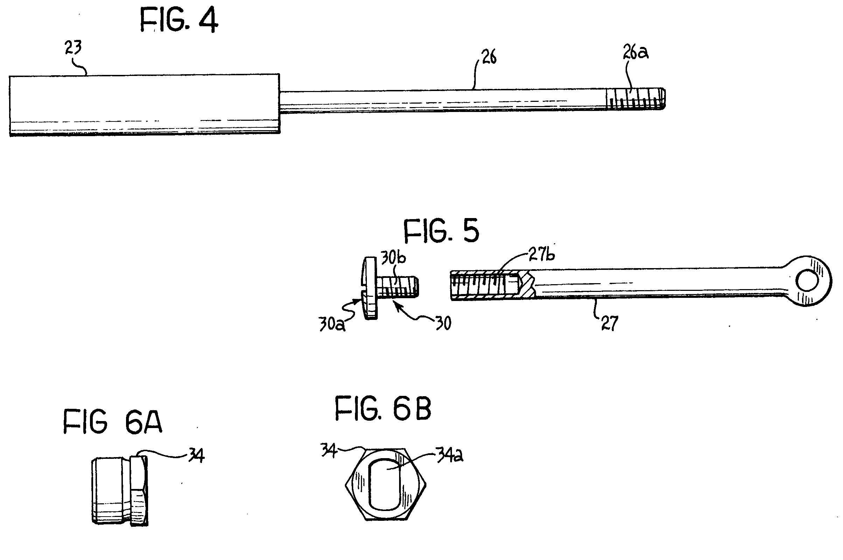

As illustrated in Figure 4, the shaft 26 has a threaded rear end 26a onto which is screwed a bush 28 carrying an end buffer 29, preferably of an elastomeric material. A coil spring 31 is interposed longitudinally between the bush 28 and the cylinder 23 so as to surround coaxially the rear portion of the shaft 26.

The shaft 26 is under compression stress from a thrust rod 27 arranged longitudinally to the rear of the shaft 26. The thrust rod 27 has a front head 30 the transverse dimension of which is slightly less than the diameter of the rear tube portion 18b so that it can be guided for linear movement inside the latter when the rear framework 11 oscillates about the horizontal pivot 12.

The head 30 has a slightly convex front surface 30a to ensure against the rear surface 29a of the buffer 29 in order to improve the transmission of longitudinal compression stresses from the thrust rod 27 to the shaft 26. As shown in Figure 5, the head 30 is preferably made as a separate part from the thrust rod 27 and has a threaded stem 30b for screwing securely into a longitudinal threaded cavity 27b formed in the thrust rod.

To the rear, the thrust rod 27 protrudes from the main frame through an aperture 32 formed in the seat tube 17 and aligned with the top tube 18 in order that the various components of the shock absorber can be inserted therein; the aperture 32 is therefore wide enough to allow the hydraulic cylinder 23, the spring 31, the bush 28 and the head 30 of the thrust rod to pass through it. The rear end of the thrust rod 27 is pivoted horizontally at 33 onto the heads 16 of the two arms 15 of the rear frame 11.

When the rear wheel is urged upwards and the rear framework 11 oscillates about the pivot point 12, the thrust rod 27 performs a combined movement of linear translation along the top tube 18 while at the same time rotating in a vertical plane passing through this tube 18. More particularly, the head 30, guided along the tube 18, exerts compression stress on the shaft 26 with a minimum oscillation against the buffer 29 and is thrust back by the reaction of the cylinder 23 and the spring 31, while the rear end of the thrust rod performs alternate movements turning about the pivot point 12.

Thanks to this arrangement, the thrust rod 27 is affected only by compression and not by flexion stress, meaning that it can be made to advantage of very light materials, such as aluminium alloys, for example. It will be appreciated that the absence of an articulated or pivoted joint between the thrust rod 27 and the shaft 26 prevents the former from coming under flexion stress, which is frequently the cause of breakages in prior art arrangements, in which the thrust rod is in fact a connecting rod pivoted on the shaft of the shock absorber. In such arrangements, when the rear of the bicycle oscillates in a vertical plane, the connecting rod is also subjected to flexion stress, which inevitably occurs when the pivotal joint is not perfectly horizontal.

A plug 34 is inserted in the aperture 32 with a vertical slit 34a for the thrust rod 27 to pass through; the dimensions of the slit 34a are calculated to allow the thrust rod to move without coming into contact with it either at the sides or above or below in its end positions when the shock absorber is either completely compressed or completely extended.

It is clear that the top tube portion 17a is needed to provide stable support for the seat tube 21 while preventing this from interfering with the thrust rod 27 passing through the seat tube 17.

A retaining coil spring 35 is inter-posed and compressed longitudinally between the plug 34 and the head 30 to ensure that the head 30 and the buffer 29 always remain in contact.

The inner surface of the upper portion of tube 18b could be lined with a thin layer (not shown) of Teflon or a similar low-friction material so as to reduce wear on the spring 31 and the other components of the shock absorber which slide inside the tube.

Advantageously, the frame of the present invention may have a locking device operable either rigidly to secure the rear framework 11 to the main frame when the shock absorber is not required or to moderate the action of the shock absorber by limiting the oscillating movement of the rear frame so as to give the bicycle a semi-rigid setting.

With reference to Figures 1, 2 and 3, a bracket 36 projects rearwardly from the upper portion 17a of the seat tube, with an arcuate slot 37 the curvature of which corresponds to a circle centred on the horizontal pivot 12. A transverse rod 38, housed in two circular seats 39, 40 formed in the head portions 16 of the arms 15 of the rear framework, is slidable in the slot but not in contact with it; the circular seat 39 (on the left in Figure 3) and the corresponding end 38a of the rod are coupled by a coarse pitch thread. The opposite end 38b of the rod 38 is fixed for rotation with, or formed in one piece with a control lever 42 which could have a hole 43 or other means of attachment at its free end for a control cable (not illustrated). A cup washer 44 is interposed between the lever 42 and the right hand head 16 to help maintain the lever 42 in the set position.

Two disc-shape pads 41 of a high-friction material, such as Bakelite or wood or a sintered material of a type used for the brake linings in motor vehicles are mounted on the rod 38; each disc 41 is interposed between the bracket 36 and one of the head portions 16.

By manually rotating the lever 42 or, alternatively, by rotating it by means of a transmission cable with one end secured to the hole 43 and one end connected to a control device arranged on the handlebar, for example, the heads 16 of the rear framework are squeezed together or resiliently spaced, respectively, as a result of the threaded coupling between the rod 38 in the circular seat 39 on the one hand and of the bias provided by the lever 42 on the other, causing the friction discs 41 to move laterally towards or away from the bracket 36 thereby assuming alternately one of the following positions:
a free position, corresponding to active operation of the shock absorber, in which the discs 41 are not in contact with the bracket 36 and thus allow the rod 38 to move in the arcuate slot 37 and thus the rear framework 11 to oscillate relative to the main frame;
a locked position, in which the discs 41 tightly grip the bracket 36, locking the position of the rear framework relative to the main frame, thereby providing a rigid setting, of the bicycle and in which the shock absorber does not work;
one or more intermediate partially locked positions, in which the strength with which the discs 41 grip the bracket 36 has been carefully calculated so as to limit to a greater or a lesser extent the aforesaid oscillating movement, providing a semi-rigid setting.

According to possible variants which are not illustrated, the operation of the discs 41 could be achieved by means of a pneumatic or electric actuator.

With reference again to Figure 3, the two arms 15 of the rear framework 11 are preferably connected by a transverse brace element 45 arranged at a particular distance from the heads 16 so as to flex only the heads 16 and the upper portion of the arms 15 while leaving the lower portion of the rear framework substantially undeformed when the discs 41 are tightened against the bracket 36.

The rear framework 11 is made more rigid by fish plates 46 welded to the connection area between the branches 14, 15, or by preferably arcuate bracing struts 47, in order to prevent, or at least considerably reduce lateral movement of the rear framework relative to the main frame.

Naturally, the principles of the invention remaining unchanged, embodiments and manufacturing details thereof may vary widely from those described and illustrated here purely by way of non-limitative example. For example, the shock absorber device could be simplified by eliminating the hydraulic cylinder 23 and by providing only one resilient spring element like the spring 31, for the head 30 of the thrust rod to bear against, possibly with an interposed resilient buffer; however, the configuration described above, with the cartridge and spring arranged in series is advantageous since it enables a lighter spring, with a smaller diameter, to be used compared to prior art configurations in which a spring is arranged around the hydraulic cylinder and is therefore fairly large and heavy.

## Claims

1. A bicycle frame which includes:
a main frame (10) with an essentially vertical seat tube (17) extending from the region of the pedals to the region of the saddle and an essentially longitudinal top tube (18), joined to the said essentially vertical seat tube, which extends from the seat area to the handlebar area;
a rear wheel suspension which includes:
a rear framework (11) for mounting the rear wheel, pivoted horizontally (12) on the main frame (10) near the region of the pedals,
at least one resilient means (23, 31) interposed between the main frame and the rear framework,
characterised in that the said resilient means (23, 31) are housed inside the top tube (18) and in that the said suspension also includes a thrust rod (27) with a rear end pivoted horizontally (33) onto the rear framework (11) and a front end (30) guided inside the top tube (18) for bearing against a surface (29a) movable inside the top tube (18) and transmitting longitudinal compression stress to the said resilient means (23, 31).

2. A frame according to Claim 1, characterised in that the front end (30) of the thrust rod has a slightly convex front surface (30a) for bearing against the said movable surface (29a).

3. A frame according to Claim 1, characterised in that the said resilient means include a shock absorber (23) coupled to a shaft (26), for linear motion inside the top tube (18) and bearing the said movable surface (29a).

4. A frame according to Claim 3, characterised in that the said movable bearing surface (29a) is carried by an elastomeric buffer (29) fixed to the shaft (26).

5. A frame according to Claim 1, characterised in that the said resilient element includes a coil spring (31).

6. A frame according to Claim 5, characterised in that the said coil spring (31) is interposed longitudinally between the shock absorber (23) and a rear end of the shaft (26), the said spring (31) coaxially surrounding the rear portion of the shaft.

7. A frame according to Claim 1, characterised in that the rear framework (11) includes a pair of V-shape arms positioned one on either side of the rear wheel, each arm including a lower portion (14) extending from the said horizontal pivot point (12) to a seat (13) for mounting the rear wheel, and an inclined portion (15) which extends from the said seat (13) to an upper head portion (16) onto which the rear end of the thrust rod (27) is pivoted horizontally at (33).

8. A frame according to Claim 1, characterised in that the said seat tube (17) has an aperture (32) aligned with the top tube (18) and being of a similar size to the internal diameter of the portion (18b) of the top tube (18) for housing the said resilient means (23, 31).

9. A frame according to Claim 8, characterised in that the said aperture (32) is adapted to receive a plug (34) with a vertical slot (34a) through which the thrust rod (27) can pass without contact.

10. A frame according to Claims 2 and 8, characterised in that longitudinally compressed resilient means (35) are interposed between the plug (34) and the head (30) of the thrust rod (27) in order to ensure that the said head (30) and the said bearing surface (29a) are in contact.

11. A frame according to Claim 1, characterised in that the said seat tube (17) extends above the area of intersection with the top tube (18), forming an upper portion (17a) of seat tube of the appropriate length to accommodate and securely retain the pillar (21) for a saddle (22) without the said pillar (21) interfering with the thrust rod (27).

12. A frame according to Claim 1, characterised in that it also includes a releasable locking device which acts between the main frame (10) and the rear framework (11) to secure the rear framework rigidly to the main frame.

13. A frame according to Claim 12, characterised in that the said locking device includes:
at least one rigid element (36) having at least one braking surface secured to at least one (10) of the said frames (10, 11);
friction braking means (41) secured to the other (11) of the said frames (10, 11) and operable to engage with the said braking surface;
a control (42) acting on the said rigid element or on the said braking means to selectively cause mutual engagement thereof.

14. A frame according to Claim 13, characterised in that the said rigid element (36) and the said braking means (41) are able to assume:
a disengaged position, in which the rear framework (11) can oscillate relative to the main frame (10);
a locked position, in which the rigid element (36) and the braking means (41) are tightened one towards the other and in which the rear framework (11) cannot oscillate relative to the main frame (10);
at least one intermediate braking position, in which the rigid element (36) and the braking means (41) are engaged with a force calculated to limit the oscillation of the rear framework (11) relative to the main frame (10).

15. A frame according to Claim 13, characterised in that the said rigid element (36) is secured to the main frame (10) and has an arcuate slot (37) the radius of which is centred on the horizontal pivot point (12).

16. A frame according to Claims 7 and 15, characterised in that the said braking means include a pair of pads (41) of high-friction material, carried by a horizontal rod (38) mounted on the head portions (16) of the rear framework and slidable in the arcuate slot (37).

17. A frame according to Claim 16, characterised in that the said rod (38) has a first threaded end (38a) for threading into a seat (39) in one of the head portions (16) and a second end (38b) fixed for rotation with a control lever (42) which is rotatable to bring the two heads (16) resiliently nearer to each other, thereby tightening the pads (41) against the bracket (36).

18. A frame according to Claim 17, characterised in that the said control lever (42) has means (43) for attaching a control cable.

19. A frame according to Claim 1, characterised in that resilient means (44) are interposed between the lever (42) and the nearer head portion (16) for maintaining the set position.

20. A frame according to Claims 11 and 13, characterised in that the said rigid element (36) is a bracket projecting to the rear of the said upper portion (17a) of the seat tube.

21. A frame according to Claim 1, characterised in that the two oblique portions (15) of the two arms of the rear framework (11) are connected by a transverse brace element (45) arranged at a predetermined distance from the head portions (16).

22. A frame according to Claim 1, characterised in that the rear framework (11) is stiffened by fish plates (46) welded to the function points of the portions (14, 15).

23. A frame according to Claim 1, characterised in that the rear frame (11) is stiffened by brace rods (47) on each rigid arm, connecting the portions (14, 15).
